# EUROPEAN PATENT APPLICATION

(11) **EP 1 783 382 A1**
(43) Date of publication of application: **09.05.2007**
(21) Application number: 06076938.7
(22) Date of filing: 26.10.2006
(51) Int. Cl.: F16B 21/18

(54) **Snap ring for holding solenoid in housing**

(30) Priority: 07.11.2005 US 268066
(71) Applicant: Delphi Technologies, Inc., Troy, Michigan 48007 (US)
(72) Inventor: Gutierrez, Orlando Efrain, Canton, MI 48187 (US)
(74) Representative: Denton, Michael John

(57) **Abstract**

A snap ring (10) to hold a solenoid (24) in a sensor or actuator housing (26) has a body (12) configured in a circular shape with opposed first and second ends that are spaced from and that face each other. First and second ears (16,18) at each end extend away from the plane defined by the body (12). The inner-facing surface (20) of the body (12) may be cylindrical and the outer-facing surface (22) may be semi-circular.

## Description

### TECHNICAL FIELD

The present invention relates generally to methods and systems for holding vehicle solenoids in housings.

### BACKGROUND OF THE INVENTION

Modem vehicles have many control systems in which a controller, in response to sensor signals, actuates vehicle components to control the vehicle. As one illustration, a gear shifter might be prevented by the operation of a solenoid from moving out of "park" unless the brake is depressed. Solenoids may also be used in vehicle sensors.

Regardless of the application, it is usually the case that a solenoid must be advanced into a housing during assembly. To hold the solenoid in the housing, a clip or bracket can be used, but as critically recognized herein, each has drawbacks. In the case of a clip, assemblers can find it difficult to force the assembly together, whereas a bracket requires a bolt that must be installed at a design torque, complicating assembly. With these critical observations in mind, the invention herein is provided.

### SUMMARY OF THE INVENTION

A snap ring to hold a solenoid in a housing such as a sensor or actuator housing has a body configured in a circular shape with opposed first and second ends that are spaced from and that face each other. First and second elongated, substantially straight ears at each end extend away from the plane defined by the body.

In some implementations the ears extend parallel to each other in the same direction. The preferred body is biased to a first configuration, wherein the circular shape of the body defines a relatively larger radius, and is deformable to a second configuration, wherein the circular shape of the body defines a relatively smaller radius. When in the circular shape the body defines a cylindrical inner-facing surface and a non-cylindrical outer-facing surface that may have, e.g., a curvilinear transverse cross-section.

In another aspect, an assembly for a vehicle includes a solenoid and a vehicle sensor housing or vehicle actuator housing. A snap ring interconnects the solenoid and housing without any clip or bracket being used to interconnect the solenoid and housing.

In still another aspect, a method for engaging a vehicle sensor component or actuation component with a housing includes sliding a snap ring around the component, and advancing the component into the housing with the snap ring deformed to a first configuration. The component is advanced until the snap ring is juxtaposed with a groove in the housing to allow the snap ring to expand into the groove to a second configuration larger than the first. No clip or bracket need be used to hold the component on the housing.

The details of the present invention, both as to its structure and operation, can best be understood in reference to the accompanying drawings, in which like reference numerals refer to like parts, and in which:

### BRIEF DESCRIPTION OF THE DRAWINGS

Figure 1 is a perspective view of the snap ring;
Figure 2 is a side view of the snap ring;
Figure 3 is a top plan view of the snap ring inside a housing, with the solenoid removed for clarity;
Figure 4 is a cross-sectional view showing the snap ring around the solenoid and being advanced into the housing; and
Figure 5 is a cross-sectional view showing the snap ring around the solenoid after having been fully advanced into the housing.

### DESCRIPTION OF THE PREFERRED EMBODIMENT

The present invention is intended for application in automotive vehicle transmission systems and will be described in that context. It is to be understood, however, that the present invention could also be successfully applied in many other applications.

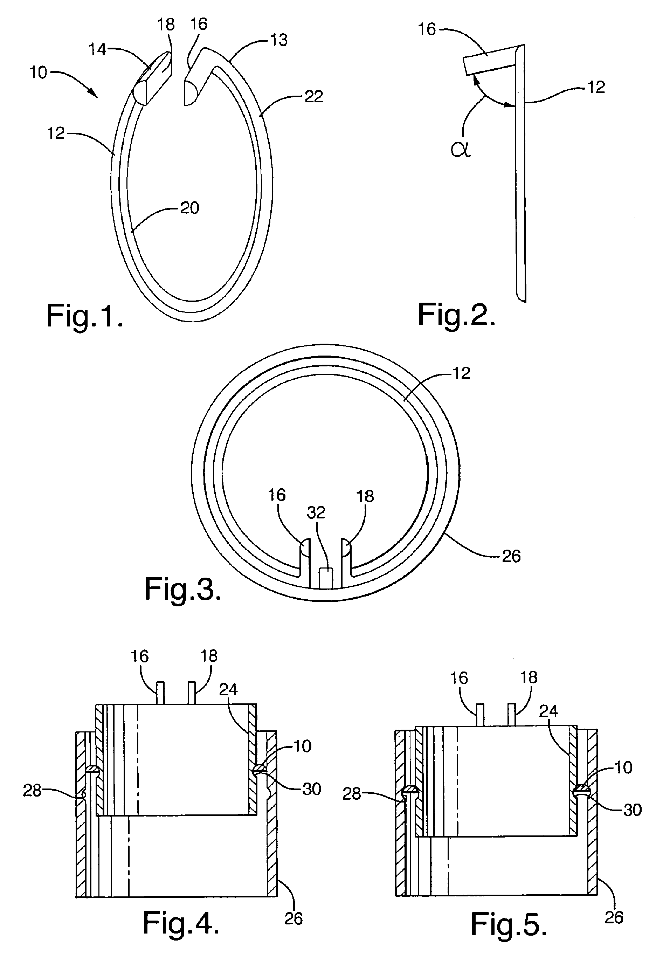

Referring to Figures 1 and 2, a snap ring 10 is shown for holding a component such as but not limited to a solenoid in a housing, such as but not limited to a valve housing or a sensor housing. As shown in Figures 1 and 2, the snap ring 10 includes a body 12 that is configured in a circular shape, but that is not a complete circle. Accordingly, the body 12 has opposed first and second ends 13, 14, with the ends being spaced from and facing each other. First and second elongated, substantially straight ears 16, 18 respectively extend away from the plane defined by the body 12 as shown, and each ear 16, 18 extends from a respective end 13, 14. The ears 16, 18 may be formed integrally with the body 12. As shown in Figure 1, the ears 16, 18 extend parallel to each other in the same direction. The ears 16, 18 establish an angle α with respect to the plane of the body 12, with the angle α being a right angle or, as shown, an oblique angle such as a sixty degree angle.

It may now be appreciated that the body 12 of the snap ring 10 is biased to a first configuration, wherein the circular shape of the body defines a relatively larger radius, and that the body 12 may be deformed in accordance with disclosure below to a second configuration, wherein the circular shape of the body defines a relatively smaller radius.

When the body 12 is in the circular shape, the body 12 defines a cylindrical inner-facing surface 20 and a non-cylindrical outer-facing surface 22. That is, by "cylindrical" is meant a surface that would be flat, were the body 12 to be laid out in a straight line, and by "non-cylindrical" is meant a surface that would not be flat, were the body 12 to be laid out in a straight line. In the embodiment shown, the outer-facing surface 22 has a curvilinear transverse cross-section, and more particularly has a semi-circular cross-section, although shapes conducive to sliding the snap ring 10 into the below-described body may be used. For instance, the outer-facing surface 22 may have a triangular transverse cross-section.

In cross-reference to Figures 3-5, the snap ring 10 can be used to hold a component such as a sensor solenoid or actuator solenoid 24 in a housing 26 such as a sensor housing or actuator body such as a valve housing or gear shift locking mechanism housing, without any clip or bracket being used to interconnect the solenoid and housing. As shown, the solenoid 24 is surrounded by the snap ring 10, and the housing 26 surrounds the snap ring 10. As best shown in Figures 4 and 5, the housing 26 is formed with a circular groove 28 for receiving the snap ring 10. The groove 28 may be tapered in cross-section, e.g., it may be semi-circular in cross-section or have another other shape as long as it is appropriately configured for receiving the outer-facing surface 22 of the snap ring 10. Also, a circular groove 30 may be formed in the solenoid 24 to receive the inner-facing surface 20 of the snap ring 10, with the groove 30 preferably having a parallelepiped-shaped transverse cross-section to securely hold the snap ring 10 therein.

In operation, the snap ring 10 is slid around the solenoid 24 until the inner-facing surface 20 is in the snap ring groove 30. The solenoid 24 is advanced into the housing 26, causing the snap ring 10 to be deformed to a smaller diameter configuration as shown in Figure 4, in which the inner-facing surface 20 is more or less bottomed in the snap ring groove 30. When the snap ring 10 is juxtaposed with the housing groove 28, owing to its material bias the body 12 of the snap ring 10 springs to a larger diameter configuration, into the housing groove 28 as shown in Figure 5. In the larger diameter configuration, the snap ring 10 remains captured in the solenoid groove 30 but is not bottomed in the solenoid groove 30. No clip or bracket need be used to hold the solenoid 24 on the housing 26.

As shown in Figures 4 and 5, the snap ring 10 is oriented with the ears 16, 18 extending outwardly from the housing 26. Accordingly, to disengage the solenoid 24 from the housing 26, the two ears 16, 18 are grasped by hand or by a tool and are pinched toward each other to cause the snap ring 10 to deform away from the larger diameter configuration, clearing the housing groove 28. The solenoid 24 is then retracted from the housing 26.

If desired, Figure 3 shows that the housing 26 may be formed with a snap ring stop 32 that is located between the ears 16, 18 when the snap ring 10 is properly oriented, to prevent rotation of the snap ring 10 beyond the space between the ears.

While the particular SNAP RING FOR HOLDING SOLENOID IN HOUSING as herein shown and described in detail is fully capable of attaining the above-described objects of the invention, it is to be understood that it is the presently preferred embodiment of the present invention and is thus representative of the subject matter which is broadly contemplated by the present invention, that the scope of the present invention fully encompasses other embodiments which may become obvious to those skilled in the art, and that the scope of the present invention is accordingly to be limited by nothing other than the appended claims, in which reference to an element in the singular is not intended to mean "one and only one" unless explicitly so stated, but rather "one or more". It is not necessary for a device or method to address each and every problem sought to be solved by the present invention, for it to be encompassed by the present claims. Furthermore, no element, component, or method step in the present disclosure is intended to be dedicated to the public regardless of whether the element, component, or method step is explicitly recited in the claims. Absent express definitions herein, claim terms are to be given all ordinary and accustomed meanings that are not irreconcilable with the present specification and file history.

## Claims

1. A snap ring (10) to hold a solenoid (24) in a housing (26), comprising:
a body (12) configured in a circular shape with opposed first and second ends (13, 14), the ends (13, 14) being spaced from and facing each other, the body (12) defining a plane; and
first and second elongated, substantially straight ears (16, 18) respectively extending away from the plane defined by the body (12), each ear (16, 18) extending from a respective end.

2. The snap ring (10) of Claim 1, wherein the ears (16, 18) extend parallel to each other in the same direction.

3. The snap ring (10) of Claim 2, wherein the body (12) is biased to a first configuration, wherein the circular shape of the body (12) defines a relatively larger radius, the body (12) being deformable to a second configuration, wherein the circular shape of the body (12) defines a relatively smaller radius.

4. The snap ring (10) of Claim 3, wherein when in the circular shape the body (12) defines a cylindrical inner-facing surface (22) and a non-cylindrical outer-facing surface (24).

5. The snap ring (10) of Claim 4, wherein the non-cylindrical outer-facing surface (24) has a curvilinear transverse cross-section.

6. The snap ring (10) of Claim 1, comprising a solenoid (24) surrounded by the snap ring (10).

7. The snap ring (10) of Claim 6, comprising a housing (26) surrounding the snap ring (10), the housing (26) being formed with a groove (28) for receiving the snap ring (10).

8. The snap ring (10) of Claim 8, wherein the housing (26) is selected from the group of housings consisting of: vehicle sensor housings, and vehicle actuator housings.

9. An assembly for a vehicle, comprising:
a solenoid (24);
a housing (26) selected from the group of housings consisting of vehicle sensor housings and vehicle actuator housings; and
a snap ring (10) interconnecting the solenoid (24) and housing (26) without any clip or bracket being used to interconnect the solenoid (24) and housing (26).

10. The assembly of Claim 9, wherein the snap ring (10) comprises:
a body (12) configured in a circular shape with opposed first and second ends, the ends being spaced from and facing each other, the body (12) defining a plane; and
first and second elongated, substantially straight ears (16, 18) respectively extending away from the plane defined by the body (12), each ear (16, 18) extending from a respective end.

11. The assembly of Claim 10, wherein the ears (16, 18) extend parallel to each other in the same direction.

12. The assembly of Claim 11, wherein the body (12) is biased to a first configuration, wherein the circular shape of the body (12) defines a relatively larger radius, the body (12) being deformable to a second configuration, wherein the circular shape of the body (12) defines a relatively smaller radius.

13. The assembly of Claim 12, wherein when in the circular shape the body (12) defines a cylindrical inner-facing surface (22) and a non-cylindrical outer-facing surface (24).

14. The assembly of Claim 13, wherein the non-cylindrical outer-facing surface (24) has a curvilinear transverse cross-section.

15. A method for engaging a vehicle sensor component or actuation component with a housing (26), comprising:
sliding a snap ring (10) around the component;
advancing the component into the housing (26) with the snap ring (10) deformed to a first configuration until the snap ring (10) is juxtaposed with a groove (28) in the housing (26) to allow the snap ring (10) to expand into the groove (28) to a second configuration larger than the first; and
not using a clip or bracket to hold the component on the housing (26).

16. The method of Claim 15, comprising disengaging the component from the housing (26) by:
grasping two ears (16, 18) on the snap ring (10) and pinching the ears (16, 18) toward each other to cause the snap ring (10) to deform away from the second configuration and clear the groove (28); and
retracting the component from the housing (26).
